(19) Europäisches Patentamt
European Patent Office
Office européen des brevets

(11) Veröffentlichungsnummer: **0 203 892**
**B1**

(12) # EUROPÄISCHE PATENTSCHRIFT

(45) Veröffentlichungstag der Patentschrift: **03.10.90**

(51) Int. Cl.$^5$: **C 02 F 1/50**

(21) Anmeldenummer: **86810222.9**

(22) Anmeldetag: **22.05.86**

(54) **Ein mit Biozid ausgerüstetes wässriges System.**

(30) Priorität: **28.05.85 CH 2244/85**

(43) Veröffentlichungstag der Anmeldung:
**03.12.86 Patentblatt 86/49**

(45) Bekanntmachung des Hinweises auf die Patenterteilung:
**03.10.90 Patentblatt 90/40**

(84) Benannte Vertragsstaaten:
**DE FR GB IT NL**

(56) Entgegenhaltungen:
**BE-A- 855 178**
**DE-A-2 657 582**

(73) Patentinhaber: **CIBA-GEIGY AG**
**Klybeckstrasse 141**
**CH-4002 Basel (CH)**

(72) Erfinder: **Lorenz, Joachim, Dr.**
**Im Tiefen Weg 17**
**D-6140 Bensheim 3 (DE)**
Erfinder: **Grade, Reinhardt, Dr.**
**Tulpenweg 11**
**D-6140 Bensheim (DE)**

**EP 0 203 892 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft die Verwendung einer speziellen polymeren quaternären Ammoniumverbindung zur Bekämpfung von Bakterien, Algen und anderen Mikroorganismen im Wasser eines Kühlkreislaufs oder eines Schwimmbeckens.

Es ist seit mehr als 30 Jahren bekannt, dass quaternäre Ammoniumverbindungen bakterizide Eigenschaften besitzen. Die biozide Wirksamkeit der Verbindungen wird mit durch ihre oberflächenaktiven Eigenschaften erklärt (Angele, M. H., Seife, Oele, Fette, Wachse *101*, S. 274, 1975). Wie die meisten oberflächenaktiven Substanzen haben auch die quaternären Ammoniumverbindungen eine gewisse Schaumkraft.

Für die Anwendung von Bioziden in Kühlkreisläufen wirkt sich die Schaumbildung nachteilig aus, da es zum Ueberschäumen der Kühlturmtasse kommen kann (Held, H. D., Kühlwasser, Vulkan-Verlag, Essen 1984, S. 212).

Häufig ist bei dem obenerwähnten Anwendungsgebiet die Zugabe von Antischaummittel erforderlich, was ein ökologischer und ökonomischer Nachteil ist, oder die Konzentration des Biozids muss herabgesetzt werden, so dass eine zuverlässige Wirksamkeit gegenüber dem Wuchs von Bakterien und anderen Mikroorganismen nicht mehr gewährleistet ist. Ausserdem müssen die üblichen, bei der Wasserbehandlung benutzten Biozide in relativ kurzen Zeitabständen nachdosiert werden, um die rasch wieder steigende Keimzahl unter Kontrolle zu halten.

Aus der BE—A—855 178 sind polymere quaternäre Ammonium-verbindungen bekannt, die eine 4,4'-Dimethylendiphenylengruppe enthalten. Für diese nicht schäumenden Verbindungen wird eine gewisse bakterriaide Wirksamkeit über eine Zeitspanne von maximal 3 Stunden offenbart.

In der DE—A—2 657 582 werden polymere quaternäre Ammoniumverbindungen beschrieben und ihre Verwendung insbesondere als Färbereihilfsmittel für Textilien. Neben anderen Verwendungen wie Fällungsmittel in der Abwasserreinigung und Antistatika für Textilmaterialien wird auch die antibakterielle Aktivität gegenüber drei Bakterienstämmen beschrieben (Beispiel 23). Wie schon erwähnt, ist die antibakterielle Aktivität von quaternären Ammoniumverbindungen seit langem bekannt.

Es war nicht zu erwarten, dass einige der in der DE-Offenlegungsschrift beschriebenen Verbindungen eine hohe biologische Aktivität zeigen, ohne dabei zu schäumen, und sich daher für die Bekämpfung von Mikroorganismen in Kühlkreisläufen und Schwimmbecken eignen.

Es ist nun ferner ausserordentlich überraschend, dass diese speziellen Ammoniumverbindungen eine nicht zu erwartende langanhaltende biozide Wirkung besitzen. Die Verwendung dieser Verbindungen zur Bekämpfung von Schadorganismen bedeutet nicht nur eine bequeme Handhabung, sondern auch einen geringeren Verbrauch an Biozid und damit eine geringere Belastung für die Umwelt.

Die vorliegende Erfindung betrifft die Verwendung von polymeren quaternären Ammoniumsalzen der allgemeinen Formel (I),

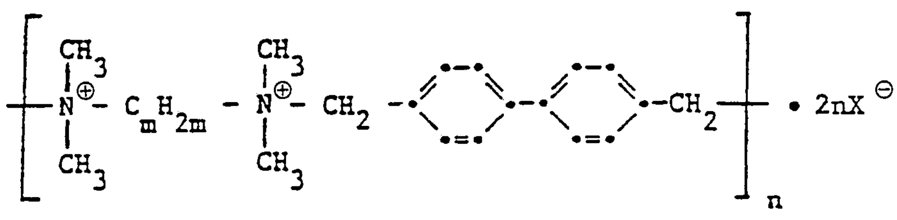 (I)

worin n eine ganze Zahl zwischen 4 und 60 ist, m eine ganze Zahl zwischen 2 und 20 ist und $X^{\ominus}$ Fluorid, Chlorid, Bromid oder Jodid bedeutet, zur Bekämpfung von Mikroorganismen im Wasser eines Kühlkreislaufs oder eines Schwimmbeckens.

Bevorzugt wird eine Verbindung der Formel (I), worin m 3 bis 12 ist, verwendet.

Besonders bevorzugt wird eine Verbindung der Formel (I), worin m 6 ist und n eine ganze Zahl zwischen 10 und 15 ist, verwendet.

Von Interesse ist die Verwendung einer Verbindung der Formel (I), worin n 6 bis 20 ist.

Von besonderem Interesse ist die Verwendung einer Verbindung der Formel (I), worin n 10 bis 15 ist. Ebenfalls bevorzugt ist die Verwendung einer Verbindung der Formel (I), worin $X^{\ominus}$ Chlorid ist.

Das hauptsächliche Einsatzgebiet der Erfindung sind Kühlwasserkreisläufe, wie sie in z.B. Kraftwerken, chemischen Produktionsanlagen, Wärmepumpen oder Klimaanlagen vorliegen. Die Dosierung des Biozids der Formel (I) ist von der Verschmutzung und der Verdünnung im Kühlkreislauf abhängig. Sie erfolgt je nach Art des Kühlkreislaufs alle 2 bis 4 Wochen.

Insbesondere bei der Bekämpfung von Schadorganismen im Kühlwasser können weitere übliche Hilfsmittel zugegeben werden, wie z.B. Korrosionsinhibitoren, Kesselsteinverhinderer, Biodispergatoren, Mittel für die Weichmachung des Wassers, Maskierungsmittel, z.B. polymere Phosphite, Phosphate, Amide der Phosphorsäure, Phosphonsäuren, polymere Carbonsäuren von z.B. Acrylsäure oder Maleinsäure, deren Anhydride oder Salze und andere Zusätze.

Ein weiteres hauptsächliches Einsatzgebiet der Erfindung ist die Bekämpfung von Schadorganismen in Schwimmbecken. Dabei wird dem Wasser im Abstand von 2 Wochen das Biozid der Formel (I) zugesetzt.

Die Dosierung erfolgt je nach Verwendungszweck in den dem Fachmann bekannten Konzentrationsbereichen. Vorzugsweise können Konzentrationen von 1 bis 100 ppm und insbesondere von 5 bis 40 ppm eingesetzt werden.

Die Herstellung der Ammoniumverbindungen der Formel (I) kann nach der in der DE—A—2 657 582 beschriebenen Methode erfolgen.

Die langanhaltende biozide Wirkung von

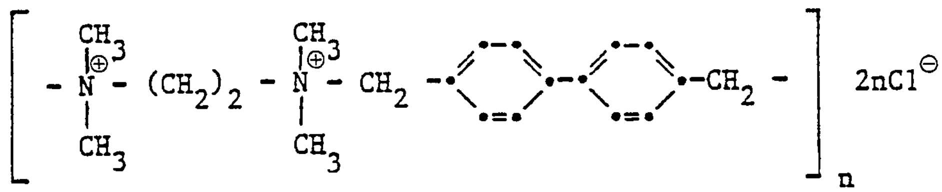 A)

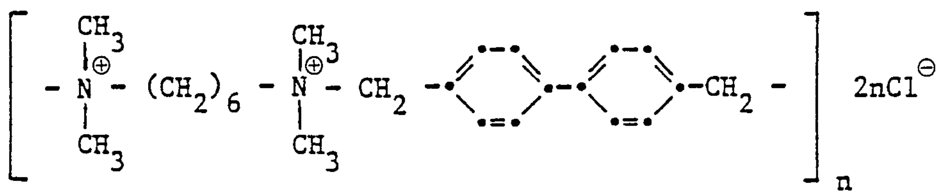 B)

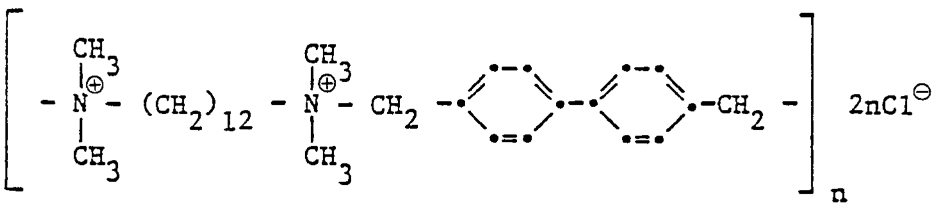 C)

wird in den folgenden Beispielen veranschaulicht.

Bei den getesteten Verbindungen liegt der Polymerisationsgrad n zwischen 4 und 60.

Beispiel 1

Der im Freien stehende und damit der natürlichen Sonneneinstrahlung, dem Staubeinfall und den Witterungseinflüssen ausgesetzte Kühlkreislauf besteht aus:

a) einem Kunststoff-Fass mit einem Volumen von 113 l und einem Ueberlauf,

b) einer Pumpe (21 l/min bei 3 m Förderhöhe),

c) einem Kühlturm mit Oregon-(Splint), Oregon-(Kernholz), Eiche-, Fichte-, Asbestzement- und PVC-Platte.

Die Frischwasserzufuhr ist so eingestellt, dass der Spritz- und Verdunstungsverlust ausgeglichen wird und das Biozid der Formel (I) in 24 Stunden auf die Hälfte seiner ursprünglichen Konzentration verdünnt wird.

Der Kühlkreislauf ist durch den natürlichen Staubeinfall und nicht durch gezielte Beimpfung infiziert.

Zur Verhinderung der Schleimbildung und des Algenwuchses wird der Kühlkreislauf zunächst 2 mal pro Woche und dann in grösser werdenden Zeitabständen mit 10 ppm der Verbindung B behandelt.

Ausgewertet wird der Versuch durch Bestimmung des Keimtiters mittels Verdünnen und Ausspateln jeweils direckt vor der Biozid-Zugabe und 3 Stunden danach sowie durch visuelle Beobachtung des Bewuchses auf den Platten.

| Zeit | Kühlwasser ohne Biozid Keimzahl/ml | Kühlwasser enthaltend die Verbindung B Keimzahl/ml | Dosierung |
|---|---|---|---|
| 0 | $2 \times 10^3$ | $1{,}5 \times 10^4$ | + |
| 3h | | $8{,}1 \times 10^1$ | |
| 3 Tage | $1{,}1 \times 10^3$ | 9 | |
| 7 Tage | $1{,}1 \times 10^3$ | $1 \times 10^1$ | + |
| 7 Tage + 3h | | 0 | |
| 10 Tage | | $2{,}7 \times 10^1$ | + |
| 10 Tage + 3 | | 0 | |
| 14 Tage | $3 \times 10^4$ | 0 | + |
| 14 Tage + 3h | | 0 | |
| 17 Tage | | 0 | |
| 21 Tage | $3{,}7 \times 10^5$ | $4{,}9 \times 10^1$ | + |
| 21 Tage | | $3{,}1 \times 10^1$ | |
| 30 Tage | | 0 | + |
| 30 Tage + 3h | | 0 | |
| 35 Tage | $7 \times 10^3$ | 0 | + |
| 35 Tage + 3h | | 0 | |
| 38 Tage | | 0 | |
| 41 Tage | $6{,}7 \times 10^2$ | 0 | |
| 45 Tage | | $7{,}5 \times 10^2$ | |
| 49 Tage | $1{,}5 \times 10^4$ | $6{,}5 \times 10^1$ | + |
| 49 Tage + 3h | | 0 | |
| 52 Tage | | 0 | |
| 56 Tage | $7 \times 10^3$ | 0 | |
| 59 Tage | | 0 | |
| 63 Tage | $4{,}3 \times 10^2$ | 0 | |
| 66 Tage | | 0 | |
| 70 Tage | $5{,}3 \times 10^2$ | 0 | |

Da die Halbwertszeit des Kühlkreislaufs 24 Stunden beträgt, wird nach der Zugabe das Biozid innerhalb von 2 Tagen so verdünnt, dass die Schadorganismen erneut wachsen sollten. Dagegen lässt sich der Tabelle entnehmen, dass die Keimzahl während des ganzen Versuchszeitraums praktisch auf null Keime reduziert ist. Während der gesamten Versuchszeit können auf den Holzteilen keinerlei Algen oder bakterieller Schleim festgestellt werden.

Beispiel 2

Es wird der im Beispiel 1 beschriebene Kühlkreislauf benutzt. Abweichend vom Beispiel 1 befindet sich der Kühlkreislauf im Raum, wird Spritzwasserverlust durch einen Plastiküberzug verhindert und ist kein Abschlemmverlust vorhanden.

Das Kühlwasser wird zu Beginn des Versuchs und noch einmal nach 8 Tagen mit 30 ppm der Verbindung B behandelt. Wie die folgende Tabelle zeigt, genügt eine zweimalige Dosierung, um das Kühlwasser über einen Zeitraum von 3 Monaten praktisch steril zu halten.

| Zeit | Kühlwasser ohne Biozid Keimzahl/ml | Kühlwasser enthaltend die Verbindung B Keimzahl/ml | Dosierung |
|---|---|---|---|
| 0 | $1{,}8 \times 10^4$ | $6{,}2 \times 10^5$ | + |
| 3h | | 0 | |
| 1 Tage | | 0 | |
| 4 Tage | $9{,}9 \times 10^3$ | $4 \times 10^1$ | |
| 6 Tage | $9{,}8 \times 10^3$ | 0 | |
| 8 Tage | $7{,}2 \times 10^4$ | $5{,}4 \times 10^1$ | + |
| 8 Tage + 3h | | 0 | |
| 11 Tage | $2{,}3 \times 10^4$ | 0 | |
| 13 Tage | $6{,}0 \times 10^3$ | 0 | |
| 19 Tage | $8{,}5 \times 10^2$ | $3 \times 10^1$ | |
| 41 Tage | $1{,}1 \times 10^3$ | $4 \times 10^1$ | |
| 49 Tage | | $1{,}3 \times 10^2$ | |
| 55 Tage | $1{,}7 \times 10^3$ | 0 | |
| 74 Tage | | 0 | |
| 81 Tage | | 0 | |
| 88 Tage | | 0 | |
| 96 Tage | | 0 | |
| 103 Tage | | 0 | |

Beispiel 3

Es wird die Versuchsanordnung aus Beispiel 2 benutzt. Der Kühlkreislauf wird zu Beginn des Versuchs mit 30 ppm Biozid der Formel (I) behandelt.

Die folgende Tabelle zeigt die biologische Wirksamkeit, ausgedrückt im Logarithmus der Keimreduktionen in Abhängigkeit von der Zeit ($KR_t$).

| Zeit/Tage | Biologische Wirksamkeit $KR_t$ | | | |
|---|---|---|---|---|
| | Kontrolle | Kühlwasser enthaltend ein Biozid der Formel (I) | | |
| | | Verbindung A | Verbindung B | Verbindung C |
| 1 | − 0,34 | 0,39 | 0,54 | 3,13 |
| 3 | − 0,4 | 0,75 | 0,51 | 3,18 |
| 7 | − 0,61 | 0,53 | 0,63 | 3,78 |
| 11 | − 0,78 | 0,09 | 1,03 | 3.42 |
| 14 | − 0,79 | 0,17 | 1,37 | 3,42 |
| 21 | − 1,24 | − 0,62 | 1,35 | 2,12 |

Kontrolle: $KR_t$ = log KBE − log KBE ($K_o$)
Kühlwasser mit Biozid: $KR_t$ = log KBE − KBE (D)
KBE: Anzahl koloniebildender Einheiten pro ml ohne Einwirkung des Biozids zum Zeitpunkt null (konstanter Wert).
KBE ($K_o$): Anzahl koloniebildender Einheiten pro ml ohne Einwirkung des Biozids.
KBE (D): Anzahl koloniebildender Einheiten pro ml nach Einwirkung des Biozids.

Der Tabelle ist zu entnehmen, dass eine einmalige Behandlung des Kühlwassers mit den erfindungsgemäss verwendeten Verbindungen die Keimzahl über einen Zeitraum von 14 bzw. 21 Tagen reduziert, während in dem unbehandelten Kühlwasser ein Anstieg der Keimzahl zu erkennen ist.

Beispiel 4

Es wird ein im Laboratorium installiertes Schwimmbad-Modell benutzt, bestehend aus:
a) einem Aquarium (Volumen: 55 l)
b) einer Pumpe (Leistung: 27 l/min)
(Die Rezirkulationsrate wird durch einen Abzweig auf 100 l/h reduziert.)
c) einem Sandfilter (ca. 1 l Filterstand)

Das Schwimmbad-Modell wird mit Tageslichtlampen im 14-Stunden Licht-10 Stunden Dunkelwechsel beleuchtet. Die Wassertemperatur stellt sich dabei auf 25—30°C ein.

Das Modellschwimmbad wird wöchentlich angeimpft mit jeweils 10 µl einer 1 + 1 + 1 etc. Mischkultur der Uebernachtkulturen von

| | | |
|---|---|---|
| gram + | | |
| Bakterien | Bacillus subtilis | ATCC 6051 |
| gram − | | |
| Bakterien | Pseudomonas aeruginosa | ATCC 10145 |
| | Enterobacter aerogenes | ATCC 13048 |
| | Alcaligenes denitrificans | ATCC 15173 |
| | Escherichia coli | ATCC 4157 |
| | Proteus vulgaris | ATCC 13315 |
| Hefe | Saccharomyces cerevisiae | DSM 70449 |

Ausserdem werden 10 ml einer 1 + 1 + 1 + etc. Mischkultur der 14-tägigen Algenkulturen von

| Süsswasseralgen | | |
|---|---|---|
| Cyanophyceen | Oscillatoria geminata | DSM 1459—8 |
| (Blaualgen) | Nostoc spec. | DSM 1453—7 |
| | Phormidium foveolarum | DSM B 1462—1 |
| | Anacystis nidulans | DSM L 1402—1 |
| Chlorophyceen | Chlorella vulgaris | DSM 211—11 a |
| (Grünalgen) | Chlorella pyrenoidosa | DSM 211—3 m |
| | Scenedesmus spec. | DSM 276—7 |
| | Ulothrix subtilissima | DSM 384—1 |
| Xanthophyceae | Tribonema aequale | DSM 880—1 |
| (braune Chrom.) | | |

zugegeben.

Zunächst beträgt die Konzentration der Verbindung B 10 mg/l. Nach einer Woche wird sie auf 20 mg/l erhöht und durch Nachdosierung aufrecht erhalten. Ausgewertet wird der Versuch durch visuelle Beobachtung und Keimzahlbestimmung auf Caso-Agar und Algen-Agar.

Wie die folgende Tabelle zeigt, halten 20 ppm der Verbindung B das Wasser nahezu steril. Algenwuchs kann über den gesamten Versuchszeitraum von 26 Wochen nicht festgestellt werden.

| | | Keimzahl/ml | |
|---|---|---|---|
| Zeit | Dosierung der Verbindung B | vor der Bakterien- und Algendosierung | 5 Minuten nach der Bakterien- und Algendosierung |
| 24 h vor der Behandlung | | $1{,}7 \times 10^4$ | |
| Beginn | 10 mg/l | $5{,}7 \times 10^3$ | |
| 30 s nach Dosierung | | $3{,}9 \times 10^3$ | $1{,}4 \times 10^3$ |
| 1 Woche | 10 mg/l | $3{,}6 \times 10^3$ | |
| 30 s nach Dosierung | | $2{,}1 \times 10^3$ | $1{,}4 \times 10^3$ |
| 2 Wochen | | $0{,}5 \times 10^1$ | |
| 30 s nach Dosierung | 10 mg/l | $2{,}3 \times 10^3$ | $2{,}7 \times 10^1$ |
| 3 Wochen | | 0 | $3{,}8 \times 10^2$ |
| 4 Wochen | | 0 | $3{,}6 \times 10^1$ |
| 5 Wochen | | $0{,}5 \times 10^1$ | $5 \times 10^1$ |

(Fortsetzung)

| Zeit | Dosierung der Verbindung B | Keimzahl/ml | |
|---|---|---|---|
| | | vor der Bakterien- und Algendosierung | 5 Minuten nach der Bakterien- und Algendosierung |
| 6 Wochen | | 0 | 0 |
| 7 Wochen | | 0 | $4,5 \times 10^1$ |
| 8 Wochen | | 0 | $8,6 \times 10^1$ |
| 9 Wochen | 10 mg/l | $1 \times 10^1$ | $1 \times 10^1$ |
| 10 Wochen | | $0,5 \times 10^1$ | 0 |
| 11 Wochen | | $0,5 \times 10^1$ | $1 \times 10^1$ |
| 12 Wochen | | $3,5 \times 10^1$ | $8,6 \times 10^1$ |
| 13 Wochen | 5 mg/l | $0,5 \times 10^1$ | $1,5 \times 10^2$ |
| 14 Wochen | | $0,5 \times 10^1$ | $1,5 \times 10^1$ |
| 15 Wochen | | $1 \times 10^1$ | $0,5 \times 10^1$ |
| 16 Wochen | | $1 \times 10^1$ | 0 |
| 17 Wochen | | 0 | $1 \times 10^1$ |
| 18 Wochen | 8 mg/l | $0,5 \times 10^1$ | $1 \times 10^1$ |
| 19 Wochen | | $0,5 \times 10^1$ | $1 \times 10^1$ |
| 20 Wochen | | 0 | $0,5 \times 10^1$ |
| 21 Wochen | 5 mg/l | $1,5 \times 10^1$ | $0,5 \times 10^1$ |
| 22 Wochen | | $0,5 \times 10^1$ | $0,5 \times 10^1$ |
| 23 Wochen | | $0,5 \times 10^1$ | $0,5 \times 10^1$ |
| 24 Wochen | 10 mg/l | $9 \times 10^1$ | $0,5 \times 10^1$ |
| 25 Wochen | | 0 | 0 |
| 26 Wochen | 5 mg/l | $1 \times 10^1$ | 0 |

Beispiel 5

Ein in einem Park gelegenes Versuchschwimmbad, das mit Ortswasser gefüllt ist, hat folgende Daten:

Volumen: 8,5 $m^3$

Wassertiefe: 0,4 m

Sandfilter: ca. 4 × Gesamtvolumen Umwälzung pro Tag

Lage: ganztägig Sonne

Der Versuch wird während der Sommermonate durchgeführt.

Die Konzentration der Verbindung B beträgt 20 ppm und wird durch Nachdosierung aufrecht erhalten.

Ausgewertet wird der Versuch durch visuelle Beobachtung und Bestimmung der Keimzahl auf Caso-Agar und Algen-Agar.

Versuchsergebnisse:

1. Die Algenkeimzahl ist während des gesamten Versuchszeitraums kleiner als $10^1$ Keime/ml.

2. Mit der Dosierung von 20 ppm der Verbindung B und Nachdosieren auf 20 ppm wird das Schwimmbadwasser nahezu steril gehalten.

3. Das Wasser macht über den gesamten Versuchszeitraum visuell einen hervorragenden Eindruck.

**Patentansprüche**

1. Verwendung von polymeren quaternären Ammoniumsalzen der allgemeinen Formel (I),

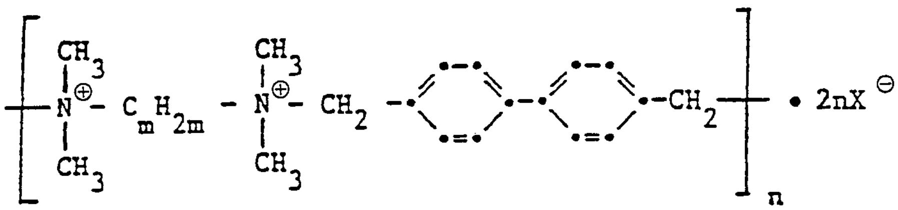 (I)

worin n eine ganze Zahl zwischen 4 und 60 ist, m eine ganze Zahl zwischen 2 und 20 ist und $X^{\ominus}$ Fluorid, Chlorid, Bromid oder Jodid bedeutet, zur Bekämpfung von Mikroorganismen im Wasser eines Kühlkreislaufs oder eines Schwimmbeckens.

2. Verwendung gemäss Anspruch 1, worin m 3 bis 12 ist.
3. Verwendung gemäss Anspruch 1, worin m 6 ist und n eine ganze Zahl zwischen 10 und 15 ist.
4. Verwendung gemäss Anspruch 1, worin n 6 bis 20 ist.
5. Verwendung gemäss Anspruch 1, worin n 10 bis 15 ist.
6. Verwendung gemäss Anspruch 1, worin $X^{\ominus}$ Chlorid ist.

**Revendications**

1. Utilisation de sels polymères d'ammonium quaternaire de formule générale (I):

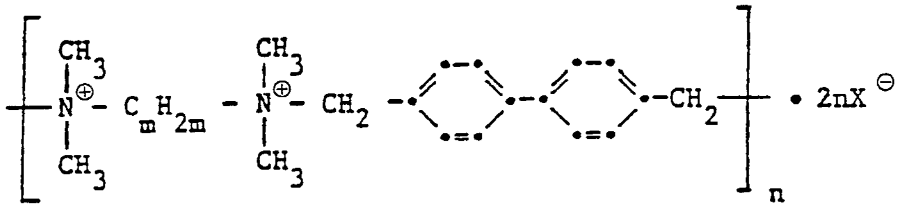 (I)

(dans laquelle n est un nombre entier valant entre 4 et 60; m est un nombre entier valant entre 2 et 20; et $X^{\ominus}$ représente un ion fluorure, chlorure, bromure ou iodure) pour lutter contre des micro-organismes dans l'eau d'un circuit de refroidissement ou d'un bassin de piscine (bassin de natation).

2. Utilisation selon la revendication 1, dans laquelle m vaut 3 à 12.
3. Utilisation selon la revendication 1, dans laquelle m vaut 6 et n est un nombre entier valant entre 10 et 15.
4. Utilisation selon la revendication 1, dans laquelle n vaut 6 à 20.
5. Utilisation selon la revendication 1, dans laquelle n vaut 10 à 15.
6. Utilisation selon la revendication 1, dans laquelle $X^{\ominus}$ est un ion chlorure.

**Claims**

1. Use of a polymeric quaternary ammonium salt of the general formula (I)

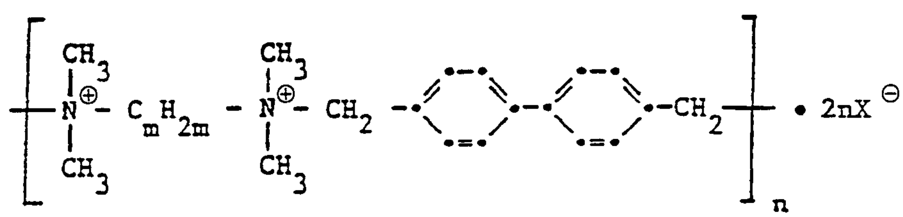 (I)

in which n is an integer between 4 and 60, m is an integer between 2 and 20 and $X^{\ominus}$ is fluoride, chloride, bromide or iodide, for controlling microorganisms in the water of a circulation cooling system or of a swimming pool.

2. Use according to claim 1, in which m is 3 to 12.
3. Use according to claim 1, in which m is 6 and n is an integer between 10 and 15.
4. Use according to claim 1, in which n is 6 to 20.
5. Use according to claim 1, in which n is 10 to 15.
6. Use according to claim 1, in which $X^{\ominus}$ is chloride.